# EUROPEAN PATENT SPECIFICATION

(11) **EP 0 983 837 B1**
(45) Date of publication and mention of the grant of the patent: **06.10.2004**
(21) Application number: 98123191.3
(22) Date of filing: 04.12.1998
(51) Int. Cl.: B29D 11/00, G02B 1/04

(54) **Method for preparation for colored contact lens**
Verfahren zur Herstellung von gefärbten Kontaktlinsen
Procédé pour la fabrication de lentilles de contact colorées

(30) Priority: 02.09.1998 US 145654
(43) Date of publication of application: 08.03.2000
(73) Proprietor: INNOVA, Inc, Hsinchu (TW)
(72) Inventor: Wang, Joe, Hsinchu (TW)
(74) Representative: Winter, Brandl, Fürniss, Hübner, Röss, Kaiser, Polte Partnerschaft

(56) References cited:
- US-A- 4 639 105
- US-A- 4 746 691
- US-A- 5 034 166
- US-A- 5 120 121

## Description

### FIELD OF THE INVENTION

The present invention relates to a method for preparation of a colored contact lens, especially to a method to prepare a contact lens with an embedded pattern as well as pigment composition suited in the method and the colored contact lens prepared according to the method.

### BACKGROUND OF THE INVENTION

The contact lens is a useful vision correction instrument for people having defects in vision. The contact lens makes it possible for a person to avoid the inconvenience of the glasses.

A method for the mass production of the contact lens is called "spincasting". It was invented by a Czech company, Céskoslovenska Akademie Ved, in 1961 and was patented in USA with the patent number of 3,660,545. The spincasting technology was later developed and was widely adopted in the industry. After polymers were used as materials of the contact lens, the manufacture cost of the contact lens was dramatically reduced. As a result, disposable contact lenses are possible and widely used by the consumers. Recently contact lenses with colored appearance were created. The color contact lens functions as a vision correction instrument and a facial adornment.

US patent application series number 07/430,222 (assigned to Schering Corporation) related to a colored contact lens having very natural appearance. This invention disclosed a lens having a non-opaque pupil section and an iris section that is at least partially opaque and comprised of two portions. The portions and sections of the contact lens contained shades with different patterns and colors so to provide a "very natural" appearance.

US patent 5,034,166, which forms the basis for the preamble of claim 1, discloses to embed a color pattern in a contact lens printed on a form surface into the body of the lens. Thus, the colored pattern is mechanically integrated in the lens surface, however no chemical binding between the lens body and the colored pattern is achieved.

US patents 4,639,105 and 4,746,691 achieve a colored lens body, however cannot achieve a colored pattern.

In the above and other inventions for the preparation of the colored contact lens, the inventors tried to provide contact lenses with patterns that made the iris of the wearers to perform a desired appearance with colors. In the preparation of the colored contact lens, one or more pigments were printed to the convex surface of the contact lens to form a particular pattern. If more than one pigment is used, the pigments were printed in sequence, with one pigment overlapping or non-overlapping with another. A contact lens so prepared has an extruded pigment layer on its convex surface. Sometimes the thickness of the pattern is several times that of one pigment layer.

Although the thickness of the pigment layer may be very thin (e.g., 0.01m/m-0.08m/m), wearer of the contact lens so prepared may feel the existence of the pigment layer(s). In order to avoid damages to the eyes of the wearer, the conventional art used pigments containing non-organic minerals, such as TiO₂. Although the diameter of the mineral particles may be up to about 5 *µ*m, the pigment may peel off in piece under the friction of the eyelid. The peeled pigment pieces may also cause damages to the cornea of the wearer.

It is thus a need in the industry to have a colored contact lens wherein a colored pattern is embedded in the lens. It is also a need in the industry to have a colored contact lens without extruded pigment layers. It is also a need to have a pigment composition suited in the preparation of colored contact lens without extruded pigment layers.

### OBJECTIVES OF THE INVENTION

The objective of this invention is to provide a novel method for preparation of a colored contact lens without extruded pigment layers.

Another objective of this invention is to provide a method for preparation of a colored contact lens with an embedded pattern.

Another objective of this invention is to provide a colored contact lens prepared according to the above methods..

Another objective of this invention is to provide a pigment composition suited in the method and the contact lens described above.

### SUMMARY OF THE INVENTION

According to the method for preparation of colored contact lens of this invention, pigments are first printed to the plastic mold for the contact lens so that the pigments are distributed on the concave surface of the plastic mold. Material for the lens is then dropped onto the concave surface of the plastic mold. The mold then spins in a determined speed for a determined period of time, such that the lens material is spread on the concave surface of the plastic mold to form a desired radius surface. The lens is then solidified under a UV lamp. A contact lens with an embedded colored pattern is thus prepared. This invention also discloses the contact lens prepared according to the preparation method of this invention.

The above and other objectives and advantages may be clearly understood from the detailed description by referring to the following drawings.

### IN THE DRAWINGS

Fig. 1 illustrates the flow chart of the method for preparation of colored contact lens of the invention.
Fig. 2 illustrates the steps of the method for preparation of colored contact lens of the invention wherein (a) shows a plastic mold applied with pigments, (b) shows a colored contact lens with a dazzling appearance being prepared and (c) shows a colored contact lens with a dazzling appearance prepared from the method of this invention.

Table I illustrates possible combinations of pigments that are applicable in the present invention.

### DETAILED DESCRIPTION OF THE INVENTION

In the conventional art, materials for the contact lens include hydrophilic high molecular polymers, such as hydroxyethyl methacrylate (HEMA). The pigment may comprise a pigment composition, which comprises a pigment, a dispersing agent and a binding agent.

While a colored contact lens with an embedded pattern will be prepared, at least the following questions shall be considered.
1. In order to embedded the pigment composition in the contact lens, the adhesive forces between the pigment and the lens must be strong and long-lasting enough, such that the pigment won't slip off the lens during the slipping and the application; But
2. During the preparation of the colored contact lens, the adhesive forces between the pigment composition and the plastic mold must be strong enough, such that particles of the pigment composition won't be removed to their respective position under the high shearing forces generated from the spinning.

These requirements are obviously in conflict.

Although it is not intended to limit the scope of this invention, the inventor has found that a certain pigment compositions may provide strong adhesive forces between the pigment composition and the plastic mold during the spinning, and between the pigment composition and the lens during the slipping and the application of the colored contact lens. In the followings, detailed description of the pigment composition, and the method for preparation of colored contact lens using the pigment composition, will be given.

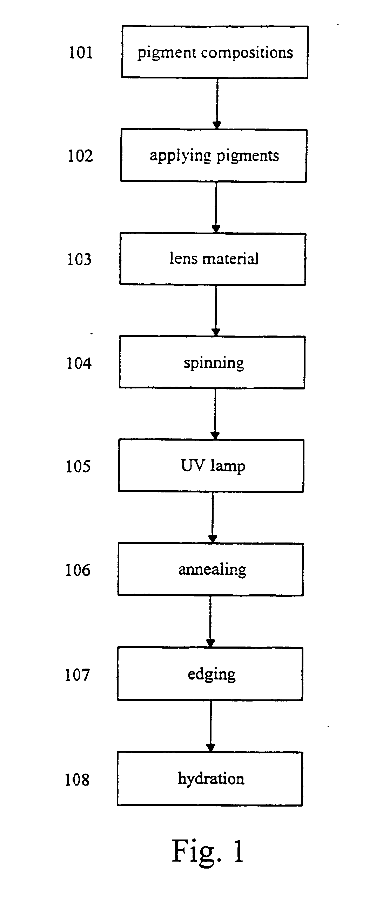

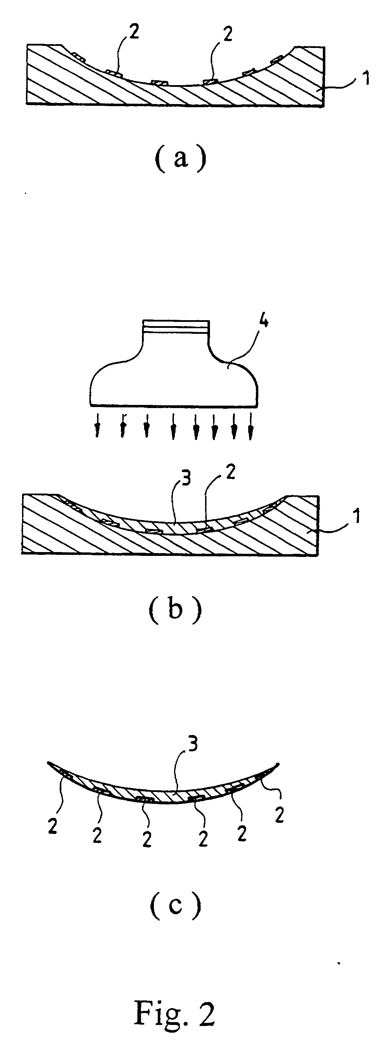

Fig. 1 illustrates the flow chart of the method for preparation of colored contact lens of the invention. Fig. 2 illustrates the steps of the method for preparation of colored contact lens of the invention wherein (a) shows a plastic mold applied with pigments, (b) shows a colored contact lens with a dazzling appearance being prepared and (c) shows a colored contact lens with a dazzling appearance prepared from the method of this invention.

As shown in Fig. 1, in the preparation of the colored contact lens of this invention, a pigment composition is prepared first at 101. The pigment composition suited for this invention comprises at least one pigment, a dispersing agent and a binding agent.

Suited dispersing agents for this invention include: monomers or pre-polymers of acrylic resins and other suited dispersing agents. Examples include: hydroxyethyl methacrylate (HEMA), hydroxypropyl methacrylate (HPMA), methyl methacrylate (MMA), glyceryl methacrylate (GMA) etc.

Suited binding agent for this invention include: acrylic emulsified pre-polymers, hydroxyethyl methacrylate (HEMA), 2- ethoxyethyl methacrylate (EOEMA), methylacrylic acid (MAA), isopropanol (IPA) and cyclopentanone. Functions of the binding agent include to generate hydrogen bonds between the lens material and the pigment composition and to generate van der Waals' forces between the lens material and the plastic mold under the supply of ultraviolet light. The van der Waals' forces keep the pigment composition adhered to the plastic mold during the processing of the lens, without being dissolved to the lens material.

Suited pigments include CI. Pigment white 6, C.I. pigment blue 15:4, C.I. pigment green 7, C.I. pigment violet 23, C.I. pigment yellow 42 and C.I. pigment Brown. In the embodiments of the present invention, the pigment composition may be composed according to the actual needs. Table I illustrates possible combinations of pigments that are applicable in the present invention. Other pigments, combinations and ratios may also be used in this invention and provide similar effects. In this table, other components of the pigment composition are also shown for reference.

**Table I**

| ratio color material | Crystal Blue | Jade Green | Violet | Cappuccino or Hazel | Pearl Gray |
|---|---|---|---|---|---|
| Rutile TᵢO_{z} (C.I. pigment white 6) | 20∼40% | 15∼35% | 20~45% | 0∼20% | 25∼35% |
| Phtalocyanine Blue (C.I. pigment Blue 15:4) | 3∼15% | | | | 1∼8% |
| Phtalocyanine Green (C.I. pigment Green 7) | | 15∼35% | | | |
| Dioxazin Violet (C.I. pigment Violet 23) | | | 3∼10% | | |
| Iron Oxide (C.I. pigment Yellow 42) | | 0∼5% | | 10∼30% | |
| (C.I. pigment Brown) | | | | 4∼20% | 3∼10% |
| binding agent | 50∼75% | | | | |
| lens material | 5∼25% | | | | |
| dispersing agent | 1∼8% | | | | |

In this step 101, the pigment compositions may be that as shown in Table I. At 102 the pigment composition is printed onto the concave surface of a plastic mold. A distribution of the pigment composition or a pattern is then formed on the concave surface of the plastic mold. Here, several pigment compositions may be applied to the plastic mold in sequence to provide a number of colors to the colored contact lens. In other words, the pattern may comprise sub-patterns in different colors. For purpose of convenience, the applied pigments may be less than three kinds. Of course, more than three pigments may be applied, if desirable.

Fig. 2 illustrates the steps of the method for preparation of colored contact lens of the invention. In fig. 2, (a) shows a plastic mold 1 applied with pigments 2.

At 103 a certain quantity of lens material 3 is dropped into the concave surface of the plastic mold 1. In some embodiments of this invention, the plastic mold is made of PVC (polyvinyl chloride). Other material may also be used to prepare the mold. The concave surface of the plastic mold 1 may be a spheric or an aspheric surface or other designs or shapes. Materials for the lens may be HEMA, as described above, or other applicable materials.

At 104 the plastic mold 1 is spun at a determined speed such that the lens material 3 is spread to the concave surface of the plastic mold 1 and form a desired radius surface, due to the centrifugal force of the spinning. The pigment particles will not be positioned at the liquid-spin fluid surface, i.e., it will not extrude from the base curve of the lens. As a result, the pigment will be buried inside the lens. Fig. 2 (b) shows a colored contact lens with an embedded pattern so prepared.

At 105 a ultra violet lamp 4 above the plastic mold 1 is turned on to solidify the lens material 3, and so the pattern of the pigment composition 2 (see Fig. 2 (a)). The solidification is continued for about 2-10 minutes. At 106, stop the spinning and remove the plastic mold/lens assembly to an annealing chamber (not shown) to be annealed. At 107 edging of the lens is conducted and at 108 hydration and stripping are operated. A colored contact lens is then accomplished. Fig. 2 (c) shows a colored contact lens with an embedded pattern prepared according to the method of this invention.

### EFFECTS OF THE INVENTION

The contact lens so prepared is observed under a microscope. The pigment and its pattern is distributed inside the lens. The lens has a smooth surface, without any defects.

The plastic mold after stripping is also observed under a microscope. The convex surface of the plastic mold appears clean and smooth. No residual of pigment is found.

The pigment that provide the colored pattern is embedded in the lens material. No extrusions from the surface of the lens is found. The pigment won't shell out to cause damages to wearers of the lens.

In the above description of the embodiment of this invention, the spincasting approach is given for example, for purpose of description. The invented method, however, is applicable to cast moulding and other approaches.

As the present invention has been shown and described with reference to preferred embodiments thereof, those skilled in the art will recognize that the above and other changes may be made therein without departing from the scope of the invention as defined in the appended claims.

## Claims

1. A method for the preparation of colored contact lens, comprising:
prepare a pigment composition**(2)**;
apply said pigment composition **(2)** to a concave surface of a mold**(1)** to form a pattern;
drop a quantity of lens material **(3)** to said concave surface of said mold **(1)**; and
solidify said lens material **(3)** and said pigment composition **(2)**;
**characterized in that** said pigment composition **(2)** comprises approximately 10-50 (weight)% of pigment, 50-70 (weight)% binding agent and 1-8 (weight)% dispersing agent.

2. A method according to claim 1, comprising:
spinning said mould (1) before solidification of said lens material (3) such that said lens material (3) is spread on said concave surface of said mould (1) to form a radius surface.

3. The method according to claim 1, comprising:
applying a die with a convex surface corresponding to said concave surface of said mold **(1)** such that said lens material **(3)** forms a radius surface;
and solidifying said lens material **(3)** and said pigment composition **(2)**.

4. The method according to any of claims **1** to **3** wherein said pigment composition **(2)** is applied to said concave surface through secondary conversion.

5. The method according to any of claims **1 to 4** wherein said dispersing agent is at least one selected from acrylic resin, hydroxyethyl methacrylate (HEMA), hydroxypropyl methacrylate (HPMA), methyl methacrylate (MMA) and glyceryl methacrylate (GMA).

6. The method according to any of claims **1 to** 5 wherein said binding agent is at least one selected from acrylic emulsified pre-polymers, hydroxyethyl methacrylate (HEMA), 2-ethoxyethyl methacrylate (EOEMA), methylacrylic acid (MAA), isopropanol (IPA) and cyclopentanone.

7. A contact lens **(2,3)** comprises a lens with a concave surface and a convex surface and a pattern comprising at least one pigment **(2)** and embedded inside said convex surface, wherein said pigment **(2)** of said pattern comprises approximately 10-50 (weight)% of pigment, 50-70 (weight)% binding agent; and **1-8** (weight)% dispersing agent.

8. A pigment composition **(2)** for coloring a contact lens **(2,3)** comprising approximately 10-50 (weight)% of pigment, 50-70 (weight) % binding agent and **1-8** (weight)% dispersing agent.

## Patentansprüche

1. Ein Verfahren zum Bereitstellen gefärbter Kontaktlinsen, das Folgendes aufweist:
Vorbereiten einer Pigmentmischung (2);
Aufbringen der Pigmentmischung (2) auf eine konkave Oberfläche einer Form (1), um ein Muster zu bilden;
Absetzen eines Quantums von Linsenmaterial (3) auf die konkave Oberfläche der Form (1);
und Verfestigen des Linsenmaterials (3) und der Pigmentmischung (2);
**dadurch gekennzeichnet, dass** die Pigmentmischung (2) ungefähr 10 bis 50 (Gewichts-)% an Pigment, 50-70 (Gewichts-)% an Bindemittel und 1 bis 8 (Gewichts-)% an Dispersionsmittel enthält.

2. Ein Verfahren nach Anspruch 1, das Folgendes aufweist:
Schleudern der Form (1) vor dem Verfestigen des Linsenmaterials (3) so, dass das Linsenmaterial (3) auf der konkaven Oberfläche der Form (1) verteilt wird, um eine gekrümmte Oberfläche zu bilden.

3. Das Verfahren nach Anspruch 1, das Folgendes aufweist:
Anwenden eines Prägestempels mit einer konvexen Oberfläche, welche der konkaven Oberfläche der Form (1) entspricht, so dass das Linsenmaterial (3) eine gekrümmte Oberfläche bildet;
und Verfestigen des Linsenmaterials (3) und der Pigmentmischung (2).

4. Das Verfahren nach einem der Ansprüche 1 bis 3, wobei die Pigmentmischung (2) durch zweifaches Umsetzen auf die konkave Oberfläche aufgebracht wird.

5. Das Verfahren nach einem der Ansprüche 1 bis 4, wobei das Dispersionsmittel als mindestens eines unter Acrylkunstharz, Hydroxylethylmethacrylat (HEMA), Hydroxypropylmethacrylat (HPMA), Methylmethacrylat (MMA) und Glyceryl-Methacrylat (GMA) ausgewählt wird.

6. Das Verfahren nach einem der Ansprüche 1 bis 5, wobei das Bindemittel als mindestens eines unter acrylisch emulgierten Präpolymeren, Hydroxyethylmethacrylat (HEMA), 2-Ethoxyethylmethacrylat (EOEMA), Methylacrylsäure (MAA), Isopropanol (IPA) und Cyclopentanon ausgewählt wird.

7. Eine Kontaktlinse (2,3) weist eine Linse mit einer konkaven Oberfläche und einer konvexen Oberfläche und einem Muster auf, das mindestens ein Pigment (2) aufweist und im Innern der konvexen Oberfläche eingebettet ist, wobei das Pigment (2) des Musters ungefähr 10 bis 50 (Gewichts-)% an Pigment, 50 bis 70 (Gewichts-)% an Bindemittel; und 1 bis 8 (Gewichts-)% an Dispersionsmittel aufweist.

8. Eine Pigmentmischung (2) zum Einfärben einer Kontaktlinse (2,3), die ungefähr 10 bis 50 (Gewichts-)% an Pigment, 50 bis 70 (Gewichts-)% an Bindemittel und 1 bis 8 (Gewichts-)% an Dispersionsmittel aufweist.

## Revendications

1. Procédé pour la fabrication d'une lentille de contact colorée comprenant :
la préparation d'une composition de pigment (2) ;
l'application de ladite composition de pigment (2) sur une surface concave d'un moule (1) afin de former un motif ;
le versement d'une quantité du matériau de lentille (3) sur ladite surface concave dudit moule (1) ;
la solidification dudit matériau de lentille (3) et de ladite composition de pigment (2) ;
**caractérisé en ce que** ladite composition de pigment (2) comprend approximativement 10-50 % (en poids) de pigment, 50-70 % (en poids) d'agent liant et 1-8 % (en poids) d'agent dispersant.

2. Procédé selon la revendication 1, comprenant :
la mise en rotation dudit moule (1) avant la solidification dudit matériau de lentille (3), de telle manière que ledit matériau de lentille (3) soit répandu sur ladite surface concave dudit moule (1) afin de former une surface arrondie.

3. Procédé selon la revendication 1, comprenant :
l'application d'une matrice ayant une surface convexe correspondant à ladite surface concave dudit moule (1), de telle manière que ledit matériau de lentille (3) forme une surface arrondie ;
et la solidification dudit matériau de lentille (3) et de ladite composition de pigment (2).

4. Procédé selon l'une quelconque des revendications 1 à 3, dans lequel ladite composition de pigment (2) est appliquée sur ladite surface concave par une transformation secondaire.

5. Procédé selon l'une quelconque des revendications 1 à 4, dans lequel ledit agent dispersant est au moins un agent choisi parmi la résine acrylique, le méthacrylate d'hydroxyéthyle (HEMA), le méthacrylate d'hydroxypropyle (HPMA), le méthacrylate de méthyle (MMA) et le méthacrylate de glycéryle (GMA).

6. Procédé selon l'une quelconque des revendications 1 à 5, dans lequel ledit agent liant est au moins un agent choisi parmi les pré-polymères acryliques émulsifiés, le méthacrylate d'hydroxyéthyle (HEMA), le méthacrylate de 2-éthoxyéthyle (EOEMA), l'acide méthacrylique (MAA), l'isopropanol (IPA) et la cyclopentanone.

7. Lentille de contact (2,3) comprenant une lentille ayant une surface concave et une surface convexe et un motif comprenant au moins un pigment (2) et incorporé à l'intérieur de ladite surface convexe, dans laquelle ledit pigment (2) dudit motif comprend approximativement 10-50 % (en poids) de pigment, 50-70 % (en poids) d'agent liant ; et 1-8 % (en poids) d'agent dispersant.

8. Composition de pigment (2) pour la coloration d'une lentille de contact (2,3) comprenant approximativement 10-50 % (en poids) de pigment, 50-70 % (en poids) d'agent liant et 1-8 % (en poids) d'agent dispersant.
